(19) Europäisches Patentamt
European Patent Office
Office européen des brevets

(11)  EP 4 305 823 B1

(12)  **EUROPEAN PATENT SPECIFICATION**

(45) Date of publication and mention
of the grant of the patent:
**08.04.2026   Bulletin 2026/15**

(21) Application number: **21719111.3**

(22) Date of filing: **14.04.2021**

(51) International Patent Classification (IPC):
*H04L 41/0823* (2022.01)    *G06N 3/08* (2023.01)
*G06N 3/0499* (2023.01)    *G06N 3/092* (2023.01)
*G06N 3/098* (2023.01)    *H04L 41/16* (2022.01)

(52) Cooperative Patent Classification (CPC):
**H04L 41/0823; G06N 3/0499; G06N 3/08;**
**G06N 3/092; G06N 3/098;** H04L 41/16

(86) International application number:
**PCT/EP2021/059608**

(87) International publication number:
**WO 2022/218516 (20.10.2022 Gazette 2022/42)**

(54) **DEVICES AND METHODS FOR COLLABORATIVE LEARNING OF A TRANSMISSION POLICY IN WIRELESS NETWORKS**

VORRICHTUNGEN UND VERFAHREN ZUM KOLLABORATIVEN LERNEN EINER ÜBERTRAGUNGSRICHTLINIE IN DRAHTLOSEN NETZWERKEN

DISPOSITIFS ET PROCÉDÉS D'APPRENTISSAGE COLLABORATIF D'UNE POLITIQUE DE TRANSMISSION DANS DES RÉSEAUX SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.01.2024   Bulletin 2024/03**

(73) Proprietor: **Huawei Technologies Co., Ltd.**
**Shenzhen, Guangdong 518129 (CN)**

(72) Inventors:
• **TSILIMANTOS, Dimitrios**
**80992 Munich (DE)**
• **DEBBAH, Merouane**
**80992 Munich (DE)**
• **DESTOUNIS, Apostolos**
**80992 Munich (DE)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
EP-A1- 3 742 669          US-A1- 2019 014 488
US-A1- 2020 358 514

• WANG YUN-PENG ET AL: "Cooperative channel assignment for VANETs based on multiagent reinforcement learning", FRONTIERS OF INFORMATION TECHNOLOGY & ELECTRONIC ENGINEERING, ZHEJIANG UNIVERSITY PRESS, HEIDELBERG, vol. 21, no. 7, 1 July 2020 (2020-07-01), pages 1047 - 1058, XP037206033, ISSN: 2095-9184, [retrieved on 20200729], DOI: 10.1631/FITEE.1900308

EP 4 305 823 B1

**Description**

TECHNICAL FIELD

The present disclosure relates to wireless communication networks in general. More specifically, the present disclosure relates to devices and methods for collaborative learning of a transmission policy, in particular a radio resource management policy in wireless networks.

BACKGROUND

In the upcoming next generation wireless networks, an immense number of devices is expected to be connected to each wireless access point (AP). For example, for Internet-of-Things (IoT) wireless networks, forecasts predict one million wireless devices per cellular base station. In this setting, radio resource management, a key aspect for wireless networks, is considered very expensive to be handled centrally, since the access point would need to collect a large state information for each device and solve large-scale optimization problems. For these reasons, it is anticipated that communications will rely on distributed resource management, where each device will decide its own transmission parameters, e.g. the uplink transmission power and the subcarrier frequencies to use, based on its own local observations such as the channel estimation and the length of the transmission queue, without any signaling from the access point to control these decisions.

While distributed resource management is certainly a very attractive approach for the scenario where multiple wireless devices contend for uplink transmissions, it is a very challenging task and most of the proposed approaches are either impractical or suffer from stability and convergence issues that lead to poor system performance. Especially when the delivery of packets with low delay or before a specified deadline is a key performance indicator besides system's throughput, stability and convergence play a very important role.

Distributed resource management becomes even more attractive with the recent success of Artificial Intelligence (AI) and specifically of Deep Neural Networks (DNNs), which have the potential to outperform existing solutions, similarly to many other applications with very complex optimization problems. The need to have a decision-making framework for distributed resource management that adapts to the dynamic environment, has naturally led to solutions that combine the representation power of DNNs with ideas from Reinforcement Learning (RL). RL is an area of machine learning where devices/agents learn an optimal behavior based on their trial-and-error interaction with the environment, and that eventually learn to maximize a long-term objective. The original RL methods suffer from the curse of dimensionality, which limits their application to models with a small number of states. This limitation can be tackled with the help of DNNs, which can be used to approximate functions used in RL methods, as for example in the Q-learning architecture, where Deep Q-learning (DQN) has shown remarkable performance in problems that have a very large state space.

Moreover, even if a large state space is no longer a prohibitive factor, there is another challenge in RL-based distributed approaches that needs to be addressed. Besides the dynamics of the environment, each agent must also take into account the behavior of other agents, where intuitively, a wireless device must learn to predict the decisions of other devices and take strategic decisions in response. Convergence can be a problem in this setting, and often it is assumed that training is done in a centralized manner, which however is impractical for resource management since it works only for a fixed number of wireless devices and models of traffic and channel. Another approach is to have distributed training on each wireless device, but this usually has stability issues and leads to unfair medium utilization which is a poor performance indicator for wireless networks.

US 2020/358514 A1 discloses techniques for beam management using adaptive learning.

Document "Cooperative channel assignment for VANETs based on multiagent reinforcement learning" by Wang Yun-Peng et al., FRONTIERS OF INFORMATION TECHNOLOGY & ELECTRONIC ENGINEERING, ZHEJIANG UNIVERSITY PRESS, HEIDELBERG, vol. 21, no. 7, 1 July 2020 (2020-07-01), pages 1047-1058, XP037206033, discloses a multiagent reinforcement learning (RL) based cooperative dynamic channel assignment (RL-CDCA) mechanism.

In light of the above, there is a need for improved devices and methods for efficient collaborative learning of a transmission policy, in particular a radio resource management policy in wireless networks.

SUMMARY

The present disclosure provides a wireless terminal, a method for operating a wireless terminal, and a computer program product, as defined in the appended set of claims, for efficient collaborative learning of a transmission policy, in particular a radio resource management policy in wireless networks.

The foregoing and other objectives are achieved by the subject matter of the independent claims. Further implementation forms are apparent from the dependent claims, the description and the figures.

According to a first aspect, a wireless terminal is provided, comprising a communication interface adapted to transmit data via an uplink to a wireless access point in a wireless network using a plurality of selectable data transmission configurations, e.g. radio resource allocations. Moreover, the wireless terminal comprises a processing circuitry adapted to select for a plurality of data transmissions to the wireless access point a respective data transmission configuration of the plurality of selectable data transmission configurations based on a global transmission policy and information about a respective first transmission state of the wireless terminal. The plurality of data transmissions may include, for instance, a first data transmission at a first time instant and a second data transmission at a second later time instant. The processing circuitry is further adapted to determine for the respective data transmission a reward for the selected data transmission configuration based on the selected data transmission configuration and information about a second transmission state of the wireless terminal after the respective data transmission (i.e. information about a change from the first transmission state to the second transmission state). The processing circuitry is further adapted to adjust a local transmission policy based on one or more of the plurality of selected data transmission configurations and the respective rewards. The communication interface is further adapted to exchange information about the adjusted local transmission policy with one or more further neighboring wireless terminals via one or more D2D links for adjusting the adjustable global transmission policy. As will be appreciated, the local transmission policy can be regarded as a virtual transmission policy.

Thus, advantageously, by collaborating and agreeing on a common global transmission policy, learning is stabilized (thus avoiding the non-stationarity issues of independent reinforcement learning) and the wireless terminals are enabled to find efficient resource allocation policies. Furthermore, advantageously, since resource allocations are performed in a distributed way, there is no heavy signaling needed from the wireless access point (only notifications regarding the success or failure of transmissions are needed). The usually added delays due to the required attachment phase to the wireless access point and due to the scheduling and power control grants that appear in conventional cellular systems are thus avoided.

In a further possible implementation form of the first aspect, the processing circuitry is adapted to adjust the local virtual transmission policy based on the one or more of the plurality of selected data transmission configurations and the respective rewards using a reinforcement learning, RL, algorithm. Thus, advantageously, decentralized uplink radio resource allocation in the communication network is enabled, since it is based on distributed learning where the wireless terminals learn in parallel, each using its own state observations.

In a further possible implementation form of the first aspect, the processing circuitry is configured to implement a neural network for implementing the RL algorithm.

In a further possible implementation form of the first aspect, for exchanging information about the adjusted local virtual transmission policy with the one or more further wireless terminals for adjusting the adjustable global transmission policy the communication interface is adapted to receive information about a respective adjusted local virtual transmission policy of the one or more further wireless terminals.

In a further possible implementation form of the first aspect, the information about a respective adjusted local virtual transmission policy of the one or more further wireless terminals comprises one or more neural network weights and wherein the processing circuitry is adapted to adjust the adjustable global transmission policy on the basis of an average of the one or more neural network weights.

In a further possible implementation form of the first aspect, the wireless terminal further comprises a memory, wherein the memory is adapted to store for the respective data transmission the reward for the selected data transmission configuration, e.g. the action and the information about the first transmission state and the second transmission state of the wireless terminal after the respective data transmission.

In a further possible implementation form of the first aspect, the processing circuitry is adapted to adjust the local virtual transmission policy based on a randomly selected subset of the plurality of selected data transmission configurations, e.g. the actions and the respective rewards.

In a further possible implementation form of the first aspect, the processing circuitry is configured to implement a further neural network, wherein the further neural network is configured to determine the respective selected data transmission configuration based on the adjustable global transmission policy and the information about the respective first transmission state of the wireless terminal. If the global transmission policy is provided by a neural network the first transmission state information (i.e. the local state observations) are the input to this neural network, which outputs the action, i.e. the selected data transmission configuration, e.g. the transmission power with the highest score. The neural network implementing the RL algorithm and the further neural network may be components of a single large neural network.

In a further possible implementation form of the first aspect, the local virtual transmission policy is parametrized by a second vector. The first vector and the second vector have the same dimensions.

In a further possible implementation form of the first aspect, the communication interface is adapted to exchange the information about the adjusted local virtual transmission policy with the one or more further neighboring wireless terminals via one or more D2D links for adjusting the adjustable global transmission policy at regular time intervals.

In a further possible implementation form of the first aspect, the communication interface is adapted to exchange the information about the adjusted local virtual transmission policy with the one or more further neighboring wireless terminals via one or more D2D links for adjusting the adjustable global transmission policy in response to a trigger signal from the wireless access point.

In a further possible implementation form of the first aspect, the information about the respective first transmission state of the wireless terminal and/or the information about the respective second transmission state of the wireless terminal after the respective data transmission comprises at least one of a transmission buffer queue length, a data transmission deadline and uplink channel state information.

In a further possible implementation form of the first aspect, the respective selected data transmission configuration, i.e. the action comprises at least one of an allocation of uplink radio resources, i.e. selection of resource blocks, an uplink transmission power and a selection of one or more of a plurality of transmission subcarriers.

According to a second aspect a method for operating a wireless terminal is provided. The method comprises the following steps:

transmitting data to a wireless access point using a plurality of different data transmission configurations;

selecting for each of a plurality of data transmissions to the wireless access point a respective data transmission configuration of the plurality of selectable data transmission configurations, i.e. the action in accordance with an adjustable global transmission policy and based on information about a respective first transmission state of the wireless terminal;

determining for the respective data transmission a reward for the selected data transmission configuration, i.e. the action based on the selected data transmission configuration and information about a second transmission state of the wireless terminal after the respective data transmission;

adjusting a local transmission policy based on one or more of the plurality of selected data transmission configurations, i.e. the actions and the respective rewards;

exchanging information about the adjusted local virtual transmission policy with one or more further neighboring wireless terminals for adjusting the adjustable global transmission policy.

The method according to the second aspect of the present disclosure can be performed by the wireless terminal according to the first aspect of the present disclosure. Thus, further features of the method according to the second aspect of the present disclosure result directly from the functionality of the wireless terminal according to the first aspect of the present disclosure as well as its different implementation forms described above and below.

According to a third aspect, a computer program product is provided, comprising program code which causes a computer or a processor to perform the method according to the second aspect, when the program code is executed by the computer or the processor.

Details of one or more embodiments are set forth in the accompanying drawings and the description below. Other features, objects, and advantages will be apparent from the description, drawings, and claims.

BRIEF DESCRIPTION OF THE DRAWINGS

In the following, embodiments of the present disclosure are described in more detail with reference to the attached figures and drawings, in which:

Fig. 1 shows a schematic diagram illustrating a wireless communication network including a wireless access point and a plurality of wireless terminals according to an embodiment;

Fig. 2 shows a schematic diagram illustrating further details of the wireless terminal according to the embodiment of figure 1;

Fig. 3 shows a flow diagram illustrating a method implemented by a wireless terminal according to an embodiment; and

Fig. 4 shows a diagram illustrating the performance of a wireless communication network including a wireless access point and a plurality of wireless terminals according to an embodiment.

In the following, identical reference signs refer to identical or at least functionally equivalent features.

## DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

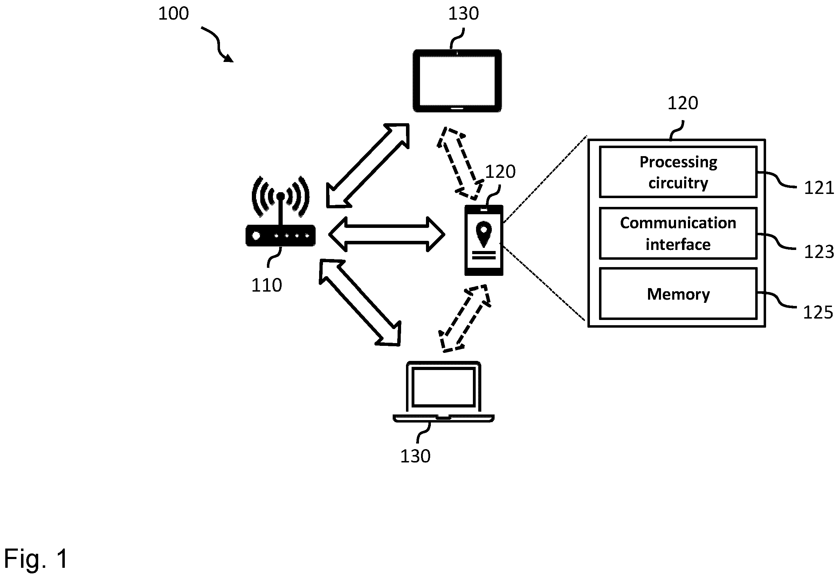

Figure 1 shows a schematic diagram illustrating a wireless communication network 100 including a wireless access point 110 and a plurality of wireless terminals 120, 130 according to an embodiment, which may include, for instance, wireless mobile phones, wireless tablet computers, wireless laptop computers, wireless IoT devices and the like. The wireless access point 110 may be connected, for instance, to the Internet for providing Internet access to the plurality of wireless terminals 120, 130.

The wireless access point 110 may comprise a communication interface that may include one or more antennas configured to communicate with the plurality of wireless terminals 120, 130. As illustrated in figure 1, the exemplary wireless terminal 120 according to an embodiment comprises a processing circuitry 121 and a communication interface 123. The processing circuitry 121 of the wireless terminal 120 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. As illustrated in figure 1, the exemplary wireless terminal 120 may further comprise a memory 125 configured to store data and executable program code which, when executed by the processing circuitry 121 causes the wireless terminal 120 to perform the functions, operations and methods described herein.

As will be described in more detail below, the communication interface 123 of the wireless terminal 120 is adapted to transmit data via an uplink to the wireless access point 110. The processing circuitry 121 of the wireless terminal 120 is adapted to select for a plurality of data transmissions to the wireless access point 110 a respective data transmission configuration of a plurality of different data transmission configurations based on an global transmission policy and information about a respective first transmission state of the wireless terminal 120. The plurality of data transmissions may include, for instance, a first data transmission at a first time instant and a second data transmission at a second later time instant. The processing circuitry 121 of the wireless terminal 120 is further adapted to determine for the respective data transmission a reward for the data transmission configuration based on the data transmission configuration and information about a second transmission state of the wireless terminal 120 after the respective data transmission. The processing circuitry 121 is further adapted to adjust a local virtual transmission policy based on one or more of the plurality of selected data transmission configurations and the respective reward. The communication interface 123 is further adapted to exchange information about the adjusted local transmission policy with the one or more further neighboring wireless terminals 130 for adjusting the global transmission policy.

In an embodiment, the adjusting of the local transmission policy may be based on the one or more of the plurality of selected data transmission configurations and the respective rewards by using Artificial Intelligence (AI), i.e. a reinforcement learning (RL) algorithm. In an embodiment, as will be described in more detail below, the processing circuitry 121 of the wireless terminal 120 is further be adapted to operate a neural network for implementing the RL algorithm.

Thus, in an embodiment Artificial Intelligence (AI) may be employed at a respective wireless terminal 120 for efficient decentralized resource management in the wireless communication network 100. The wireless terminal 120 may be designed to allow the plurality of wireless terminals 120, 130 to coordinate and agree on a common policy, so that the training process of the neural network is stabilized and the wireless terminals 120, 130 can converge to efficient resource allocation policies. The coordination and the agreement on a common policy may be based on a branch of game theory, called Mean Field Game (MFG) theory, which is intended to model situations in which agents take decisions in a context of strategic interactions and can be used to address a specific class of important problems, namely situations in which a very large population of small agents interact with each other. In MFG, all interactions to any one player with other players are replaced by an aggregate interaction under some assumptions. This reduces a multi-players large problem into an effectively few parameters problem in which each agent plays against the aggregate of the rest of the players. The main idea in all these works is about the impact of the aggregate of the system in terms of the contribution of each individual.

Thus, according to an embodiment, the wireless terminals 120, 130 may use an initial common transmission policy and then, based on local state observations by using this common policy, each wireless terminals 120, 130 may learn the best response regarding the currently generated interference. This is performed by keeping a local virtual policy at each wireless terminal 120, 130 that is frequently updated based on new state observations. The virtual policy may not be used to transmit any data, but helps to find a better common policy. After a number of updates, the wireless terminals 120, 130 use Device to Device (D2D) communication links to coordinate among each other and agree on a new common global policy. During this step, information related to the virtual policy of each wireless terminal 120, 130 is exchanged among the wireless terminals 120, 130.

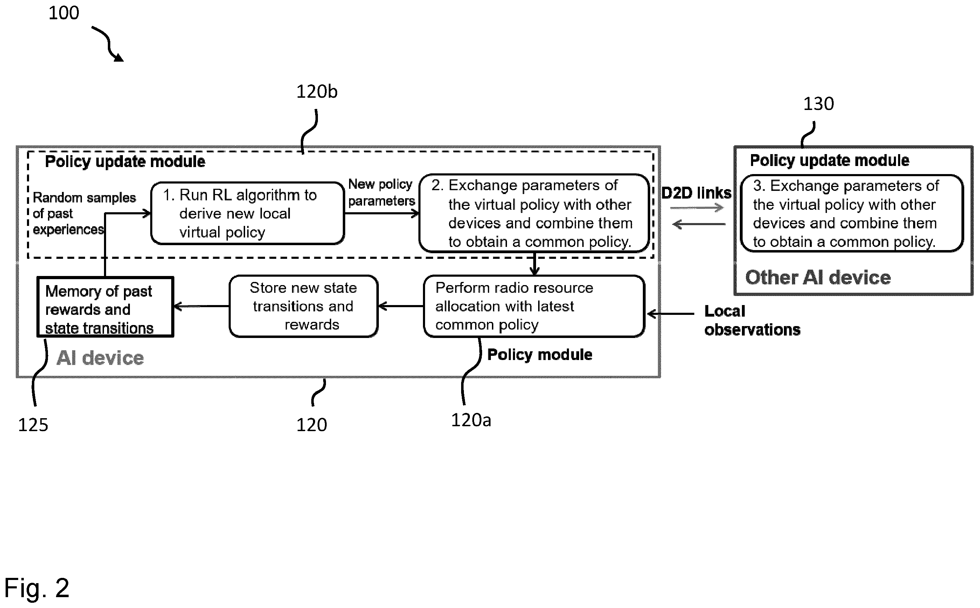

As can be taken from figure 2, in an embodiment, the processing circuitry of the wireless terminal 120 may implement a Policy Module 120a and a Policy Update Module 120b, which are described in detail below.

The Policy Module 120a, according to an embodiment, receives the local state observations of the wireless terminal 120, e.g. channel states, time until deadline and buffer queue length, at regular time intervals, i.e. time slots, as inputs at the beginning of each time slot and, based on them, takes the radio resource allocation decisions for this time slot, e.g. uplink power level and in which resource blocks to transmit, following the latest common transmission policy, as received from the Policy Update Module 120b. For example, if the policy is represented by a neural network, the Policy Module 120a may perform a forward pass in this neural network, given the local state observations as inputs, and provides a radio resource allocation as output. This radio resource allocation is then implemented by the relevant physical and MAC layer modules of the wireless terminal 120. In an embodiment, the global transmission policy may be parametrized by a vector $\theta$, that may, for example, contain the weights and biases of a deep neural network.

The Policy Update Module 120b may be configured to (i) store the state transitions and rewards of the wireless terminal 120, accrued by the common global transmission policy, and use them to find a new local virtual policy, and (ii) to periodically exchange the parameters of the local virtual policy with the other wireless terminals 130 in the wireless communication network 100 over the D2D links in order to derive the new common global transmission policy, which is then provided to the Policy Module 120a.

The local virtual policy at device *i*, i.e. wireless terminal 120, 130 may be parametrized by a vector $w^i$, which has the same dimensions as the vector $\theta$ that represents the common global transmission policy (e.g. if neural networks are used, then the neural networks for the common global transmission policy and the local virtual policy may have the same structure, i.e. architecture).

The Policy Update Module 120b may be configured to store, after each uplink resource allocation decision is taken by the Policy Module 120a, in a replay experience buffer (which may be a part of the memory 125) the tuple ( $s_t^i, u_t^i, r_t^i, s_{t+1}^i$ ), consisting of the state $s_t^i$ at the beginning of that slot t, the resource allocation decision $u_t^i$ taken (i.e. the action), the reward $r_t^i$ gained and the next state $s_{t+1}^i$, which is a result of the resource allocation decision $u_t^i$ and the interference by the resource allocation decisions of the other wireless devices 130.

The Policy Update Module 120b may be further configured to periodically sample such tuples randomly from the memory 125 and run a reinforcement learning algorithm to update the local virtual policy (update the vector $w^i$) to a policy that would accrue a better long-term reward $\sum_t r_t^i$ given the current interference than the common transmission policy, update it to the direction of the gradient $g_\theta^i$ of the long term reward accrued by the common transmission policy (i.e. estimate $g_\theta^i$ as the gradient of the long term reward at the global transmission policy and set $w^i \leftarrow \theta + a \cdot g_\theta^i$, where a is a parameter of the protocol) or estimate the gradient $g_\theta^i$ in the direction of which to update the local virtual policy.

The Policy Update Module 120b may be further configured to periodically exchange the parameters of the local virtual policy or the gradient estimation (depending on which of the two the device 120 is configured to learn) with the other wireless terminals 130 over the D2D links. This can be done by broadcasting the aforementioned parameters to all wireless terminals 130 over the wireless communication network 100 defined by the D2D links, while, at the same time, receiving such messages broadcasted by the other wireless terminals 130.

The Policy Update Module 120b may be further configured to, once all messages have been received, update the common global transmission policy. Depending on what messages were exchanged, the common global transmission policy may be updated in one of the following ways: (i) if the local virtual policy parameters are exchanged:

$$\theta \leftarrow \frac{1}{N}\sum_{j=1}^{N} w^j$$

, or (ii) if the gradients are exchanged by updating the local virtual policy as

$w^i \leftarrow w^i + \beta \cdot \frac{1}{N} \sum_{j=1}^{N} g^j$ where $\beta$ is a stepsize (parameter of the protocol), and periodically (in a prespecified period which is a parameter by the protocol or according to some update signals from the wireless access point 110) copying the local virtual policy to the global one: $w^i \leftarrow \theta$.

Thus, according to an embodiment, decentralized uplink radio resource allocation in the wireless communication network 100 is enabled, since it is based on distributed learning where the wireless terminals 120, 130 learn in parallel, each using its own state observations. Since resource allocations are performed in a distributed way, there is no heavy signaling needed from the wireless access point 110 (only notifications regarding the success or failure of transmissions are needed). Indeed, the usually added delays due to the required attachment phase to the wireless access point 110 and due to the scheduling and power control grants that appear in conventional cellular systems are avoided. The fact that wireless terminals 120, 130 collaborate and agree on a common transmission policy stabilizes learning (thus avoiding the non-stationarity issues of independent reinforcement learning) and enables the wireless terminals 120, 130 to find efficient resource allocation policies.

According to an embodiment, a modular design for efficient decentralized uplink radio resource allocation in wireless communication networks 100 is provided. Specifically, the wireless communication network 100 consists of the wireless terminal 120 that takes radio resource allocation decisions by using a frequently updated common transmission policy (common among all wireless terminals 130 in its neighborhood). The wireless terminal 120 (i) observes and stores its own state transitions (e.g. buffer queue length, packet delivery deadlines, channel gains) and rewards by following the above common transmission policy, (ii) uses the above stored information to perform an optimization step (of an RL algorithm) in order to update a virtual own local transmission policy (virtual in the sense that it is not used to transmit any data, but helps to find a better common policy) or to estimate the gradient $g^j$ of the long term reward accrued by the common transmission policy, (iii) broadcasts information (updated parameters, gradients) of the virtual own local policy to other wireless terminals 130 in the wireless communication network 100, by using D2D communication channels, wherein broadcast can be done in single-hop or multi-hop manner, depending on the distances among the devices, (iv) receives similar broadcast information from other wireless terminals 130 and (v) updates the common transmission policy by taking the average of the received collected information from other wireless terminals 130 and uses this updated policy for next radio resource allocation decisions.

According to an embodiment, an implementation of the wireless communication network 100 may be in an environment where devices 120, 130, i.e. wireless terminal 120, 130 need to perform power control for serving deadline-constrained traffic. More specifically, packets arrive at the wireless terminal 120 according to a random process and when a packet arrives it should be delivered within the next D slots, otherwise it is considered useless and it is discarded. At the beginning of each slot, the wireless terminal 120 may decide the power level it will use for transmission. The reward depends on whether the packet is successfully delivered and on the level of the selected transmit power. In detail, for device i (e.g. wireless terminal 120) the state: $s_t^i = \left(x_t^i, d_t^i, g_t^i\right)$ can be denoted, wherein $x_t^i$ denotes the number of payload bits not yet delivered, $d_t^i$ denotes the number of slots left until the deadline expires, and $g_t^i$ denotes the power gain of the channel between the wireless terminal 120 and the access point 110. Further, the action $u_t^i \in \{0, U_2, \dots, U_{L-1}, 1\}$ for the wireless terminal 120 can be denoted, which is the normalized power level used for transmission at slot t, consisting of $L$ power levels. Given the actions and the channel states of all devices at slot t, the number of payload bits sent by the wireless terminal 120 at slot $t$ may be calculated using the Shannon formula treating interference as noise:

$$R_t^i = T_s \cdot W \cdot \log_2\left(1 + \frac{g_t^i \cdot u_t^i \cdot P_{max}}{\sigma^2 + \frac{\rho}{N}\sum_{j \neq i} g_t^j \cdot u_t^j \cdot P_{max}}\right),$$

wherein W denotes the bandwidth used for transmission, $T_s$ denotes the duration of each time slot, $\sigma^2$ denotes the power of the thermal noise at the receiver (here the AP 110) and $\rho$ is an orthogonality factor among the (random) codes used by each wireless device 120, 130. The number of bits remaining in the queue of device i (e.g. the wireless terminal 120) at the beginning of the next slot is given by $x_{t+1}^i = \left[x_{t+1}^i - R_t^i\right]^+$.

The reward for the wireless terminal 120 can be denoted by $r_t^i = 1\left(x_{t+1}^i = 0\right) - c \cdot P_{max} \cdot u_t^i$, wherein 1() is the indicator function and $c$ is a penalty factor. The Policy Module 120a used in this embodiment is a deep neural network with L outputs (one for each power level) with parameters $\theta$. Denoted by $Q_{PM}\left(s_t^i, u; \theta\right)$ can be the output of this neural network corresponding to power level u when its input is s. The power level each device $i$ uses at slot $t$ may be either

$$u_t^i = arg\ \max_u\ Q_{PM}(s_t^i, u; \theta)$$ with probability 1 - $\varepsilon$, or chosen uniformly at random with probability $\varepsilon$.

The Policy Update Module 120b keeps a deep neural network of the same structure as the Policy Module 120a, parametrized by $w^i$, whose output that corresponds to power level u is denoted by $Q_{PUM}^i(s_t^i, u; w^i)$. In order to update this local virtual policy, according to an embodiment the Policy Update Module 120b at device i (e.g. the wireless terminal 120) works as follows:

(i) after each transmission, it observes the next state and reward and stores the transition ($s_t^i, u_t^i, r_t^i, s_{t+1}^i$) in its replay buffer 125 and samples at random M tuples from its replay buffer 125 and sets:

$$g^i \leftarrow g^i + \sum_m \left[ \left( Q_{PUM}^i\left(s_{t_m}^i, u_{t_m}^i; w^i\right) - r_{t_m}^i - \max_u Q_{PUM}^i\left(s_{t_m+1}^i, u; w^i\right) \right) \cdot \right.$$
$$\left. \nabla_{w^i} Q_{PUM}^i(s_{t_m}^i, u_{t_m}^i; w^i) \right],$$

(ii) every T slots, it broadcasts $g^i$ over the D2D network and, after it has received all such vectors from all other wireless devices 130, it calculates $w^i \leftarrow w^i - \beta \cdot \frac{1}{N} \sum_k g^k$ and sets $g^i \leftarrow 0$, and

(iii) every $T'(> T)$ slots, the parameters are copied to the Policy Module 120a: $\theta \leftarrow w^i$.

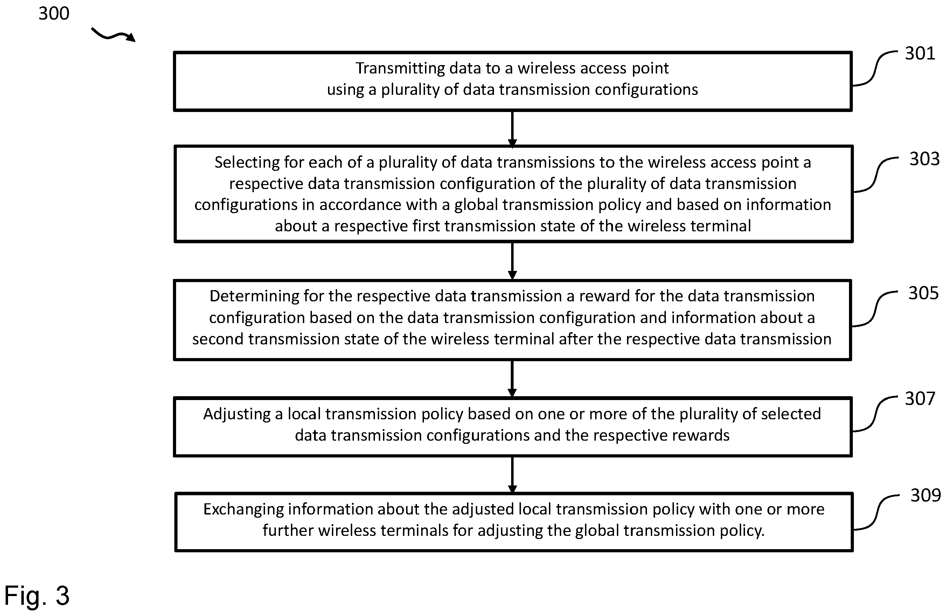

Fig. 3 shows a flow diagram illustrating a method 300 implemented by the wireless terminal 120 according to an embodiment. The method 300 comprises the steps of:

transmitting 301 data to the wireless access point 110 using a plurality of data transmission configurations;

selecting 303 for each of a plurality of data transmissions to the wireless access point 110 a respective data transmission configuration of the plurality of data transmission configurations in accordance with a global transmission policy and based on information about a respective first transmission state of the wireless terminal 120;

determining 305 for the respective data transmission a reward for the data transmission configuration based on the data transmission configuration and information about a second transmission state of the wireless terminal 120 after the respective data transmission;

adjusting 307 a local transmission policy based on one or more of the plurality of selected data transmission configurations and the respective rewards;

exchanging 309 information about the adjusted local transmission policy with one or more further wireless terminals 130 for adjusting the global transmission policy.

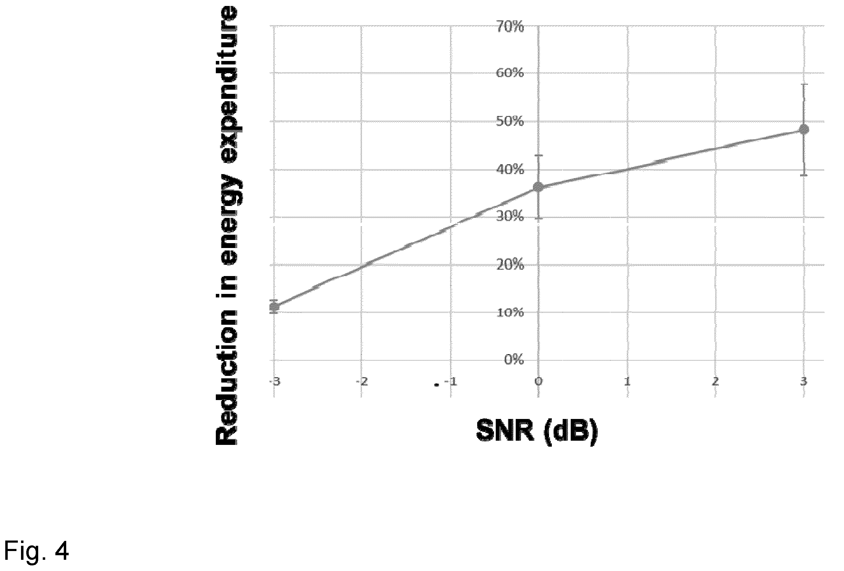

Fig. 4 shows a graph illustrating the performance of the wireless communication network 100 including a wireless access point 110 and the plurality of wireless terminals 120, 130 according to an embodiment. For the performance evaluation a system of 264 devices was simulated, wherein the deadline is 1ms and the payload size for each packet is 16 bytes, in accordance to the Ultra Reliable Low Latency Communication (URLLC) requirements for 5G. In addition, the slot duration is set to 1/16 ms, which is the finest granularity in the time domain specified in the 5G New Radio (NR) standards and $W = 16 \cdot 12 \cdot 240$kHz is set, which is the corresponding bandwidth of a resource block. Denoting $\bar{g}$ the mean value of the channel gain for each device, an important metric that characterizes the wireless environment is the SNR, i.e. the average signal strength over the noise power in the absence of interference, where a device transmits at full power, which is given

as $SNR(dB) = 10 \log_{10} \frac{\bar{g} \cdot P_{max}}{\sigma^2}$. This metric illustrates the effect of interference (and interactions between the devices):

In low SNR, noise is the dominant cause of performance degradation and interference management does not play a significant role, while the situation is reversed in high SNR scenarios.

The performance of the system is examined for SNR values of -3, 0 and 3dB. In all cases, the devices 120, 130 managed to learn an uplink power allocation policy that was able to deliver almost all packets. The power savings with respect to a baseline that transmits at random power is compared in Fig. 4. This baseline was selected for being the best performing simple baseline that managed to have very high packet delivery rate (and also transmitting randomly is envisioned as a method that will be used in URLLC scenarios). The results shown in Fig. 4 illustrate significant energy gains with respect to this baseline, which are higher as the SNR increases. This means that the wireless devices 120, 130 according to embodiments disclosed herein learn to perform efficient uplink interference management in the regime where it is the most important aspect in order to achieve high system performance.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A wireless terminal (120), comprising:

 a communication interface (123) adapted to transmit data via an uplink to a wireless access point (110) in a wireless network (100); and
 a processing circuitry (121) adapted to select for each of a plurality of data transmissions to the wireless access point (110) a respective data transmission configuration of a plurality of data transmission configurations based on a global transmission policy and information about a respective first transmission state of the wireless terminal (120), wherein the global transmission policy is a global radio resource management policy in wireless networks; wherein the processing circuitry (121) is further adapted to determine for the respective data transmission a reward for the data transmission configuration based on the data transmission configuration and information about a second transmission state of the wireless terminal (120) after the respective data transmission; wherein the processing circuitry (121) is further adapted to adjust a local transmission policy based on one or more of the plurality of selected data transmission configurations and the respective rewards; wherein the communication interface (123) is further adapted to exchange information about the adjusted local transmission policy with one or more further wireless terminals (130) for adjusting the global transmission policy; wherein the information about the respective first transmission state of the wireless terminal (120) and/or the information about the respective second transmission state of the wireless terminal (120) after the respective data transmission comprises at least one of a transmission buffer queue length and a data transmission deadline.

2. The wireless terminal (120) of claim 1, wherein for exchanging information about the adjusted local transmission policy with the one or more further wireless terminals (130) for adjusting the global transmission policy the communication interface (123) is adapted to receive information about a respective adjusted local transmission policy of the one or more further wireless terminals (130).

3. The wireless terminal (120) of claim 1 or 2, wherein the processing circuitry (121) is adapted to adjust the local transmission policy based on the one or more of the plurality of selected data transmission configurations and the respective rewards using a reinforcement learning, RL, algorithm.

4. The wireless terminal (120) of claim 3, wherein the processing circuitry (121) is adapted to operate a neural network for implementing the RL algorithm.

**5.** The wireless terminal (120) of claim 4, wherein the information about a respective adjusted local transmission policy of the one or more further wireless terminals (130) comprises one or more neural network weights and wherein the processing circuitry (121) is adapted to adjust the global transmission policy on the basis of an average of the one or more neural network weights.

**6.** The wireless terminal (120) of any one of claims 1 to 5, wherein the wireless terminal (120) further comprises a memory (125), wherein the memory (125) is adapted to store for the respective data transmission the reward for the data transmission configuration and the information about the first transmission state and the second transmission state of the wireless terminal (120) after the respective data transmission.

**7.** The wireless terminal (120) of any one of claims 1 to 6, wherein the processing circuitry (121) is adapted to adjust the local transmission policy based on a randomly selected subset of the plurality of selected data transmission configurations and the respective rewards.

**8.** The wireless terminal (120) of any one of claims 1 to 7, wherein the processing circuitry (121) is configured to implement a further neural network, wherein the further neural network is configured to determine the respective selected data transmission configuration based on the global transmission policy and the information about the respective first transmission state of the wireless terminal.

**9.** The wireless terminal (120) of claim 8, wherein the global transmission policy is parametrized by a first vector, wherein the first vector comprises weights and/or biases of the further neural network and wherein the local transmission policy is parametrized by a second vector, wherein the first vector and the second vector have the same dimensions.

**10.** The wireless terminal (120) of any one of claims 1 to 9, wherein the communication interface (123) is adapted to exchange the information about the adjusted local transmission policy with the one or more further wireless terminals (130) for adjusting the global transmission policy at regular time intervals.

**11.** The wireless terminal (120) of any one of claims 1 to 10, wherein the communication interface (123) is adapted to exchange the information about the adjusted local transmission policy with the one or more further wireless terminals (130) for adjusting the global transmission policy in response to a trigger signal from the wireless access point (110).

**12.** The wireless terminal (120) of any one of claims 1 to 11, wherein the respective selected data transmission configuration comprises at least one of an allocation of uplink radio resources, an uplink transmission power and a selection of one or more of a plurality of transmission subcarriers.

**13.** A method (300) for operating a wireless terminal (120), the method (300) comprising:

transmitting (301) data to a wireless access point (110) using a plurality of data transmission configurations;
selecting (303) for each of a plurality of data transmissions to the wireless access point (110) a respective data transmission configuration of the plurality of data transmission configurations in accordance with a global transmission policy and based on information about a respective first transmission state of the wireless terminal (120), wherein the global transmission policy is a global radio resource management policy in wireless networks;
determining (305) for the respective data transmission a reward for the data transmission configuration based on the data transmission configuration and information about a second transmission state of the wireless terminal (120) after the respective data transmission;
adjusting (307) a local transmission policy based on one or more of the plurality of selected data transmission configurations and the respective rewards;
exchanging (309) information about the adjusted local transmission policy with one or more further wireless terminals (130) for adjusting the global transmission policy;
wherein the information about the respective first transmission state of the wireless terminal (120) and/or the information about the respective second transmission state of the wireless terminal (120) after the respective data transmission comprises at least one of a transmission buffer queue length and a data transmission deadline.

**14.** A computer program product comprising a computer-readable storage medium for storing program code which causes a computer or a processor to perform the method (300) of claim 13 when the program code is executed by the computer or the processor.

**Patentansprüche**

1. Drahtloses Endgerät (120), umfassend:

   eine Kommunikationsschnittstelle (123), die dazu geeignet ist, Daten über einen Uplink an einen drahtlosen Zugangspunkt (110) in einem drahtlosen Netzwerk (100) zu übertragen; und
   eine Verarbeitungsschaltung (121), die dazu geeignet ist, eine entsprechende Datenübertragungskonfiguration einer Vielzahl von Datenübertragungskonfigurationen für jede einer Vielzahl von Datenübertragungen an den drahtlosen Zugangspunkt (110) basierend auf einer globalen Übertragungsrichtlinie und Informationen über einen entsprechenden ersten Übertragungszustand des drahtlosen Endgeräts (120) auszuwählen,
   wobei die globale Übertragungsrichtlinie eine globale Funkressourcenverwaltungsrichtlinie in drahtlosen Netzwerken ist;
   wobei die Verarbeitungsschaltung (121) ferner dazu geeignet ist, eine Belohnung für die Datenübertragungskonfiguration für die jeweilige Datenübertragung basierend auf der Datenübertragungskonfiguration und Informationen über einen zweiten Übertragungszustand des drahtlosen Endgeräts (120) nach der jeweiligen Datenübertragung zu bestimmen;
   wobei die Verarbeitungsschaltung (121) ferner dazu geeignet ist, eine lokale Übertragungsrichtlinie basierend auf einer oder mehreren der Vielzahl von ausgewählten Datenübertragungskonfigurationen und den jeweiligen Belohnungen anzupassen;
   wobei die Kommunikationsschnittstelle (123) ferner dazu geeignet ist, Informationen über die angepasste lokale Übertragungsrichtlinie mit einem oder mehreren weiteren drahtlosen Endgeräten (130) zum Anpassen der globalen Übertragungsrichtlinie auszutauschen;
   wobei die Informationen über den jeweiligen ersten Übertragungszustand des drahtlosen Endgeräts (120) und/oder die Informationen über den jeweiligen zweiten Übertragungszustand des drahtlosen Endgeräts (120) nach der jeweiligen Datenübertragung mindestens eine von einer Länge der Übertragungspufferwarteschlange und einer Datenübertragungsfrist umfassen.

2. Drahtloses Endgerät (120) nach Anspruch 1, wobei die Kommunikationsschnittstelle (123) zum Austauschen von Informationen über die angepasste lokale Übertragungsrichtlinie mit dem einen oder den mehreren weiteren drahtlosen Endgeräten (130) zum Anpassen der globalen Übertragungsrichtlinie geeignet ist, um Informationen über eine jeweilige angepasste lokale Übertragungsrichtlinie des einen oder der mehreren weiteren drahtlosen Endgeräte (130) zu empfangen.

3. Drahtloses Endgerät (120) nach Anspruch 1 oder 2, wobei die Verarbeitungsschaltung (121) dazu geeignet ist, die lokale Übertragungsrichtlinie basierend auf der einen oder den mehreren der Vielzahl von ausgewählten Datenübertragungskonfigurationen und den jeweiligen Belohnungen unter Verwendung eines Algorithmus für bestärkendes Lernen, RL-Algorithmus, anzupassen.

4. Drahtloses Endgerät (120) nach Anspruch 3, wobei die Verarbeitungsschaltung (121) dazu geeignet ist, ein neuronales Netz zum Implementieren des RL-Algorithmus zu betreiben.

5. Drahtloses Endgerät (120) nach Anspruch 4, wobei die Informationen über eine jeweilige angepasste lokale Übertragungsrichtlinie des einen oder der mehreren weiteren drahtlosen Endgeräte (130) eine oder mehrere Gewichtungen des neuronalen Netzwerks umfasst, und wobei die Verarbeitungsschaltung (121) dazu geeignet ist, die globale Übertragungsrichtlinie auf der Basis eines Durchschnitts der einen oder mehreren Gewichtungen des neuronalen Netzwerks anzupassen.

6. Drahtloses Endgerät (120) nach einem der Ansprüche 1 bis 5, wobei das drahtlose Endgerät (120) ferner einen Speicher (125) umfasst, wobei der Speicher (125) dazu geeignet ist, die Belohnung für die Datenübertragungskonfiguration für die jeweilige Datenübertragung und die Informationen über den ersten Übertragungszustand und den zweiten Übertragungszustand des drahtlosen Endgeräts (120) nach der jeweiligen Datenübertragung zu speichern.

7. Drahtloses Endgerät (120) nach einem der Ansprüche 1 bis 6, wobei die Verarbeitungsschaltung (121) dazu geeignet ist, die lokale Übertragungsrichtlinie basierend auf einer zufällig ausgewählten Teilmenge der Vielzahl von ausgewählten Datenübertragungskonfigurationen und den jeweiligen Belohnungen anzupassen.

8. Drahtloses Endgerät (120) nach einem der Ansprüche 1 bis 7, wobei die Verarbeitungsschaltung (121) dazu konfiguriert ist, ein weiteres neuronales Netzwerk zu implementieren, wobei das weitere neuronale Netzwerk dazu konfiguriert ist, die jeweilige ausgewählte Datenübertragungskonfiguration basierend auf der globalen Übertragungsrichtlinie und den Informationen über den jeweiligen ersten Übertragungszustand des drahtlosen Endgeräts zu bestimmen.

9.  Drahtloses Endgerät (120) nach Anspruch 8, wobei die globale Übertragungsrichtlinie durch einen ersten Vektor parametrisiert wird, wobei der erste Vektor Gewichtungen und/oder Vorspannungen des weiteren neuronalen Netzwerks umfasst, und wobei die lokale Übertragungsrichtlinie durch einen zweiten Vektor parametrisiert wird, wobei der erste Vektor und der zweite Vektor dieselben Abmessungen aufweisen.

10. Drahtloses Endgerät (120) nach einem der Ansprüche 1 bis 9, wobei die Kommunikationsschnittstelle (123) dazu geeignet ist, die Informationen über die angepasste lokale Übertragungsrichtlinie mit dem einen oder den mehreren weiteren drahtlosen Endgeräten (130) zum Anpassen der globalen Übertragungsrichtlinie in regelmäßigen Zeitabständen auszutauschen.

11. Drahtloses Endgerät (120) nach einem der Ansprüche 1 bis 10, wobei die Kommunikationsschnittstelle (123) dazu geeignet ist, die Informationen über die angepasste lokale Übertragungsrichtlinie mit dem einen oder den mehreren weiteren drahtlosen Endgeräten (130) zum Anpassen der globalen Übertragungsrichtlinie als Reaktion auf ein Auslösesignal von dem drahtlosen Zugangspunkt (110) auszutauschen.

12. Drahtloses Endgerät (120) nach einem der Ansprüche 1 bis 11, wobei die jeweilige ausgewählte Datenübertragungskonfiguration mindestens eine von einer Zuweisung von Uplink-Funkressourcen, einer Uplink-Sendeleistung und einer Auswahl eines oder mehrerer einer Vielzahl von Übertragungsunterträgern umfasst.

13. Verfahren (300) zum Betreiben eines drahtlosen Endgeräts (120), wobei das Verfahren (300) Folgendes umfasst:

Übertragen (301) von Daten an einen drahtlosen Zugangspunkt (110) unter Verwendung einer Vielzahl von Datenübertragungskonfigurationen;
Auswählen (303) einer entsprechenden Datenübertragungskonfiguration der Vielzahl von Datenübertragungskonfigurationen für jede einer Vielzahl von Datenübertragungen an den drahtlosen Zugangspunkt (110) gemäß einer globalen Übertragungsrichtlinie und basierend auf Informationen über einen entsprechenden ersten Übertragungszustand des drahtlosen Endgeräts (120), wobei die globale Übertragungsrichtlinie eine globale Funkressourcenverwaltungsrichtlinie in drahtlosen Netzwerken ist;
Bestimmen (305) einer Belohnung für die Datenübertragungskonfiguration für die jeweilige Datenübertragung basierend auf der Datenübertragungskonfiguration und Informationen über einen zweiten Übertragungszustand des drahtlosen Endgeräts (120) nach der jeweiligen Datenübertragung;
Anpassen (307) einer lokalen Übertragungsrichtlinie basierend auf einer oder mehreren der Vielzahl von ausgewählten Datenübertragungskonfigurationen und den jeweiligen Belohnungen;
Austauschen (309) von Informationen über die angepasste lokale Übertragungsrichtlinie mit einem oder mehreren weiteren drahtlosen Endgeräten (130) zum Anpassen der globalen Übertragungsrichtlinie;
wobei die Informationen über den jeweiligen ersten Übertragungszustand des drahtlosen Endgeräts (120) und/oder die Informationen über den jeweiligen zweiten Übertragungszustand des drahtlosen Endgeräts (120) nach der jeweiligen Datenübertragung mindestens eine von einer Länge der Übertragungspufferwarteschlange und einer Datenübertragungsfrist umfassen.

14. Computerprogrammprodukt, umfassend ein computerlesbares Speichermedium zum Speichern von Programmcode, welcher bewirkt, dass ein Computer oder ein Prozessor das Verfahren (300) nach Anspruch 13 durchführt, wenn der Programmcode durch den Computer oder den Prozessor ausgeführt wird.

**Revendications**

1.  Terminal sans fil (120), comprenant :

une interface de communication (123) adaptée pour transmettre des données par l'intermédiaire d'une liaison montante vers un point d'accès sans fil (110) dans un réseau sans fil (100) ; et
un circuit de traitement (121) adapté pour sélectionner pour chacune d'une pluralité de transmissions de données vers le point d'accès sans fil (110) une configuration de transmission de données respective d'une pluralité de configurations de transmission de données sur la base d'une politique de transmission globale et d'informations sur un premier état de transmission respectif du terminal sans fil (120), dans lequel la politique de transmission globale est une politique globale de gestion de ressources radio dans des réseaux sans fil ;

dans lequel le circuit de traitement (121) est également adapté pour déterminer pour la transmission de données respective une récompense pour la configuration de transmission de données sur la base de la configuration de transmission de données et d'informations sur un second état de transmission du terminal sans fil (120) après la transmission de données respective ;

dans lequel le circuit de traitement (121) est également adapté pour régler une politique de transmission locale sur la base d'une ou de plusieurs de la pluralité de configurations de transmission de données sélectionnées et des récompenses respectives ;

dans lequel l'interface de communication (123) est également adaptée pour échanger des informations sur la politique de transmission locale réglée avec un ou plusieurs autres terminaux sans fil (130) pour régler la politique de transmission globale ;

dans lequel les informations sur le premier état de transmission respectif du terminal sans fil (120) et/ou les informations sur le second état de transmission respectif du terminal sans fil (120) après la transmission de données respective comprennent au moins l'une d'une longueur de file d'attente de mémoire tampon de transmission et d'une date limite de transmission de données.

2. Terminal sans fil (120) selon la revendication 1, dans lequel pour échanger des informations sur la politique de transmission locale réglée avec les un ou plusieurs autres terminaux sans fil (130) pour régler la politique de transmission globale l'interface de communication (123) est adaptée pour recevoir des informations sur une politique de transmission locale réglée respective des un ou plusieurs autres terminaux sans fil (130).

3. Terminal sans fil (120) selon la revendication 1 ou 2, dans lequel le circuit de traitement (121) est adapté pour régler la politique de transmission locale sur la base des une ou plusieurs de la pluralité de configurations de transmission de données sélectionnées et des récompenses respectives à l'aide d'un algorithme d'apprentissage par renforcement, RL.

4. Terminal sans fil (120) selon la revendication 3, dans lequel le circuit de traitement (121) est adapté pour faire fonctionner un réseau neuronal pour mettre en œuvre l'algorithme RL.

5. Terminal sans fil (120) selon la revendication 4, dans lequel les informations sur une politique de transmission locale réglée respective des un ou plusieurs autres terminaux sans fil (130) comprennent un ou plusieurs poids de réseau neuronal et dans lequel le circuit de traitement (121) est adapté pour régler la politique de transmission globale sur la base d'une moyenne des un ou plusieurs poids de réseau neuronal.

6. Terminal sans fil (120) selon l'une quelconque des revendications 1 à 5, dans lequel le terminal sans fil (120) comprend également une mémoire (125), dans lequel la mémoire (125) est adaptée pour stocker pour la transmission de données respective la récompense pour la configuration de transmission de données et les informations sur le premier état de transmission et le second état de transmission du terminal sans fil (120) après la transmission de données respective.

7. Terminal sans fil (120) selon l'une quelconque des revendications 1 à 6, dans lequel le circuit de traitement (121) est adapté pour régler la politique de transmission locale sur la base d'un sous-ensemble sélectionné au hasard de la pluralité de configurations de transmission de données sélectionnées et des récompenses respectives.

8. Terminal sans fil (120) selon l'une quelconque des revendications 1 à 7, dans lequel le circuit de traitement (121) est configuré pour mettre en œuvre un réseau neuronal supplémentaire, dans lequel le réseau neuronal supplémentaire est configuré pour déterminer la configuration de transmission de données sélectionnée respective sur la base de la politique de transmission globale et des informations sur l'état de première transmission respective du terminal sans fil.

9. Terminal sans fil (120) selon la revendication 8, dans lequel la politique de transmission globale est paramétrée par un premier vecteur, dans lequel le premier vecteur comprend des poids et/ou des biais du réseau neuronal supplémentaire et dans lequel la politique de transmission locale est paramétrée par un second vecteur, dans lequel le premier vecteur et le second vecteur ont les mêmes dimensions.

10. Terminal sans fil (120) selon l'une quelconque des revendications 1 à 9, dans lequel l'interface de communication (123) est adaptée pour échanger les informations sur la politique de transmission locale réglée avec les un ou plusieurs autres terminaux sans fil (130) pour régler la politique de transmission globale à intervalles de temps réguliers.

11. Terminal sans fil (120) selon l'une quelconque des revendications 1 à 10, dans lequel l'interface de communication (123) est adaptée pour échanger les informations sur la politique de transmission locale réglée avec les un ou plusieurs autres terminaux sans fil (130) pour régler la politique de transmission globale en réponse à un signal déclencheur du point d'accès sans fil (110).

12. Terminal sans fil (120) selon l'une quelconque des revendications 1 à 11, dans lequel la configuration de transmission de données sélectionnée respective comprend au moins l'une d'une allocation de ressources radio de liaison montante, d'une puissance de transmission de liaison montante et une sélection d'une ou de plusieurs d'une pluralité de sous-porteuses de transmission.

13. Procédé (300) de fonctionnement d'un terminal sans fil (120), le procédé (300) comprenant :

la transmission (301) de données à un point d'accès sans fil (110) à l'aide d'une pluralité de configurations de transmission de données ;
la sélection (303) pour chacune d'une pluralité de transmissions de données vers le point d'accès sans fil (110) d'une configuration de transmission de données respective de la pluralité de configurations de transmission de données conformément à une politique de transmission globale et sur la base d'informations sur un premier état de transmission respectif du terminal sans fil (120), dans lequel la politique de transmission globale est une politique globale de gestion de ressources radio dans des réseaux sans fil ;
la détermination (305) pour la transmission de données respective d'une récompense pour la configuration de transmission de données sur la base de la configuration de transmission de données et d'informations sur un second état de transmission du terminal sans fil (120) après la transmission de données respective ;
le réglage (307) d'une politique de transmission locale sur la base d'une ou plusieurs de la pluralité de configurations de transmission de données sélectionnées et des récompenses respectives ;
l'échange (309) d'informations sur la politique de transmission locale réglée avec un ou plusieurs autres terminaux sans fil (130) pour régler la politique de transmission globale ;
dans lequel les informations sur le premier état de transmission respectif du terminal sans fil (120) et/ou les informations sur le second état de transmission respectif du terminal sans fil (120) après la transmission de données respective comprennent au moins l'une d'une longueur de file d'attente de mémoire tampon de transmission et d'une date limite de transmission de données.

14. Produit de programme informatique comprenant un support de stockage lisible par ordinateur pour stocker un code de programme qui amène un ordinateur ou un processeur à réaliser le procédé (300) selon la revendication 13 lorsque le code de programme est exécuté par l'ordinateur ou le processeur.

Fig. 1

Fig. 2

300

Transmitting data to a wireless access point
using a plurality of data transmission configurations — 301

Selecting for each of a plurality of data transmissions to the wireless access point a
respective data transmission configuration of the plurality of data transmission
configurations in accordance with a global transmission policy and based on information
about a respective first transmission state of the wireless terminal — 303

Determining for the respective data transmission a reward for the data transmission
configuration based on the data transmission configuration and information about a
second transmission state of the wireless terminal after the respective data transmission — 305

Adjusting a local transmission policy based on one or more of the plurality of selected
data transmission configurations and the respective rewards — 307

Exchanging information about the adjusted local transmission policy with one or more
further wireless terminals for adjusting the global transmission policy. — 309

Fig. 3

EP 4 305 823 B1

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2020358514 A1

### Non-patent literature cited in the description

- Cooperative channel assignment for VANETs based on multiagent reinforcement learning. **WANG YUN-PENG et al.** FRONTIERS OF INFORMATION TECHNOLOGY & ELECTRONIC ENGINEERING. ZHEJIANG UNIVERSITY PRESS, 01 July 2020, vol. 21, 1047-1058